# FASCICULE DE BREVET EUROPEEN

(11) **EP 0 999 910 B1**
(45) Date de publication et mention de la délivrance du brevet: **02.05.2003**
(21) Numéro de dépôt: 99920920.8
(22) Date de dépôt: 26.05.1999
(51) Int. Cl.: B23C 3/06, B23B 5/18, B24B 5/42

(54) **MACHINE-OUTIL ET PROCEDE DE TRAVAIL D'UNE MACHINE-OUTIL POUR L'USINAGE D'UN VILEBREQUIN**
WERKZEUGMASCHINE UND VERFAHREN EINER SOLCHEN MASCHINE ZUM HERSTELLEN VON KURBELWELLEN
MACHINE TOOL FOR MACHINING A CRANKSHAFT AND WORK METHOD BY COMPLEMENTING SUCH A MACHINE TOOL

(30) Priorité: 26.05.1998 FR 9806598
(43) Date de publication de la demande: 17.05.2000
(73) Titulaire: RENAULT AUTOMATION COMAU, 92365 Meudon la Forêt, Cedex (FR)
(72) Inventeur: ASSIE, Jean-Paul, F-81100 Castres (FR)
(74) Mandataire: Richebourg, Michel François
(86) Numéro de dépôt international: FR9901228
(87) Numéro de publication internationale: WO99061189

(56) Documents cités:
- US-A- 2 128 186
- US-A- 4 305 232
- US-A- 5 655 423

## Description

La présente invention a trait au domaine de l'usinage d'un vilebrequin et notamment à la réalisation par fraisage et/ou par rectification des paliers et manetons constituant ledit vilebrequin.

L'invention se base selon le préambule de la revendication 1, sur un arrière-plan technologique défini par le brevet français n° 2727885 déposé au nom de la demanderesse. Le texte de ce brevet décrit et représente une machine-outil pour l'usinage de vilebrequins, le procédé de travail et la chaîne d'usinage d'une telle machine-outil ayant pour objet de diminuer les temps morts dus aux opérations dites auxiliaires telles celles de débridage, de bridage, de chargement, de déchargement et d'indexage de la pièce sur la machine-outil. La machine-outil, affectée notamment à l'usinage par tournage-arasage de vilebrequins pour des moteurs à quatre cylindres en ligne, comprend, agencés sur un bâti le long de l'axe de transfert d'une chaîne d'usinage desdits vilebrequins et dans un même plan horizontal :
- un poste d'usinage équipé d'au moins un disque porte-outils assurant les opérations de tournage-arasage des vilebrequins,
- et deux stations de travail qui, assurant l'entraînement en rotation de deux vilebrequins, sont disposées parallèlement en amont et en aval du poste d'usinage, de telle sorte que le disque porte-outils de ce dernier monté mobile le long de l'axe de transfert puisse évoluer selon un mouvement de va-et-vient d'une station de travail à l'autre et assurer l'usinage d'un vilebrequin pendant les opérations auxiliaires nécessaires à l'installation d'un nouveau vilebrequin sur l'autre station de travail, et vice-versa.

La disposition coplanaire des deux stations de travail de part et d'autre d'un poste d'usinage, conjuguée avec la mobilité de ce dernier entre les deux stations de travail, autorise ainsi pendant les temps nécessaires aux opérations auxiliaires d'un vilebrequin sur une station de travail, les opérations d'usinage d'un vilebrequin sur l'autre station de travail par le disque porte-outils du même poste d'usinage. De ce fait, le rapport quantitatif est multiplié par deux et l'encombrement occupé par l'ensemble de la machine-outil est moindre que celui occupé par deux machines-outils, avantage non négligeable compte tenu du coût du mètre carré occupé en zone industrielle.

L'évolution des outils ainsi que des modes de réalisation ont permis d'envisager des applications nouvelles, notamment le fraisage ainsi que la rectification, à ce concept novateur de machine-outil, applications nouvelles qui ont amené la demanderesse, à la conception d'une machine-outil avec un procédé de travail d'une telle machine-outil.

La machine-outil pour l'usinage de vilebrequins de l'invention est donc du type de celle comprenant, agencés sur un bâti dans un même plan horizontal:
- un poste d'usinage équipé d'au moins un outil tournant assurant l'usinage des vilebrequins,
- et deux stations de travail qui, assurant l'entraînement en rotation de deux vilebrequins, sont disposées parallèlement en amont et en aval du poste d'usinage, de telle sorte que le disque porte-outil de ce dernier monté mobile le long de l'axe de transfert puisse évoluer selon un mouvement de va-et-vient d'une station de travail à l'autre et assurer l'usinage d'un vilebrequin sur une station de travail pendant les opérations auxiliaires nécessaires à une nouvelle pièce de révolution sur l'autre station de travail. Dans cette machine-outil, l'outil tournant assure l'usinage partiel des paliers et manetons du vilebrequin sur une première station de travail et le même outil tournant assure le complément d'usinage desdits paliers et manetons sur la deuxième station de travail. Cette machine-outil est également du type de celle comportant un portique de transfert assurant le passage du vilebrequin d'une station de travail à une autre station de travail.

Selon la caractéristique principale de l'invention, la machine-outil de l'invention est remarquable en ce que le vilebrequin venant d'être usiné sur une première station de travail est tourné à 180° selon un axe vertical avant d'être installé sur la deuxième station de travail, ledit portique comportant un moyen assurant la rotation à 180° du vilebrequin par rapport à un axe vertical.

Cette caractéristique est particulièrement intéressante en ce qu'il est avantageux de n'assurer qu'un usinage partiel du maneton ou du palier pour des raisons de contraintes mécaniques lors de l'opération d'usinage.

Un autre avantage est que, contrairement à la chaîne d'usinage mise en oeuvre au moyen d'une machine-outil conforme à celle décrite dans l'art antérieur, il est possible d'assurer l'usinage avec un seul disque porte-outil, des paliers et des manetons. Une telle machine-outil permet donc une simplification des moyens d'usinage.

Bien entendu pour un meilleur rendement, il serait judicieux que le poste d'usinage comporte plusieurs disques porte-outil.

Bien entendu pour un meilleur rendement, il serait judicieux que le poste d'usinage comporte plusieurs disques porte-outil.

La caractéristique permettant de réaliser les opérations auxiliaires en temps masqué est exploitée mais cette nouvelle application a pour particularité de profiter de l'architecture à deux stations de travail pour simplifier les moyens d'usinage et réduire le nombre de machine-outils sur une même chaîne d'usinage en réalisant une partie de l'usinage sur une station de travail et en finissant cet usinage sur l'autre station de travail.

Cette caractéristique autorise en outre l'utilisation d'outils tournants adoptant une forme asymétrique.

L'invention concerne également le procédé de travail d'une telle machine-outil qui est remarquable en ce qu'il consiste
- à réaliser des usinages partiels des manetons et paliers du vilebrequins sur une première station,
- à déposer de la première station de travail, le vilebrequin venant d'être partiellement usiné,
- à faire tourner ledit vilebrequin à 180° par rapport à un axe vertical,
- à installer ledit vilebrequin dans la deuxième station de travail,
- et à assurer le complément d'usinage des manetons et paliers dudit vilebrequin sur ladite deuxième station.

Le retournement à 180° du vilebrequin est particulièrement avantageux en ce qu'il permet d'utiliser de nouveau l'outil ayant permis d'assurer l'usinage partiel des paliers et des manetons. En effet, à partir du moment où la largeur n'est pas fixée (et c'est le cas puisque l'outil assure l'usinage aussi bien des manetons que des paliers) l'outil ne peut pas adopter une forme symétrique. Aussi, afin assurer un même usinage aux deux extrémités de chaque portée définie par les manetons et les paliers, le vilebrequin doit être retourné à 180°.

La complémentarité des usinages décrite par le procédé mettant en oeuvre un outil assurant l'usinage partiel des paliers et manetons d'un vilebrequin sur une première station de travail, le même outil assurant le complément d'usinage sur une autre station de travail, est particulièrement nouvelle et inventive.

Les concepts fondamentaux de l'invention venant d'être exposés ci-dessus dans leur forme la plus élémentaire, d'autres détails et caractéristiques ressortiront plus clairement à la lecture de la description qui suit, donnant à titre d'exemple non limitatif et en regard du dessin annexé, un mode de réalisation d'une machine-outil conforme à l'invention.

Cette description se réfère à la figure portée par le dessin annexé, qui est une vue schématique d'ensemble d'une machine-outil M conforme à l'invention.

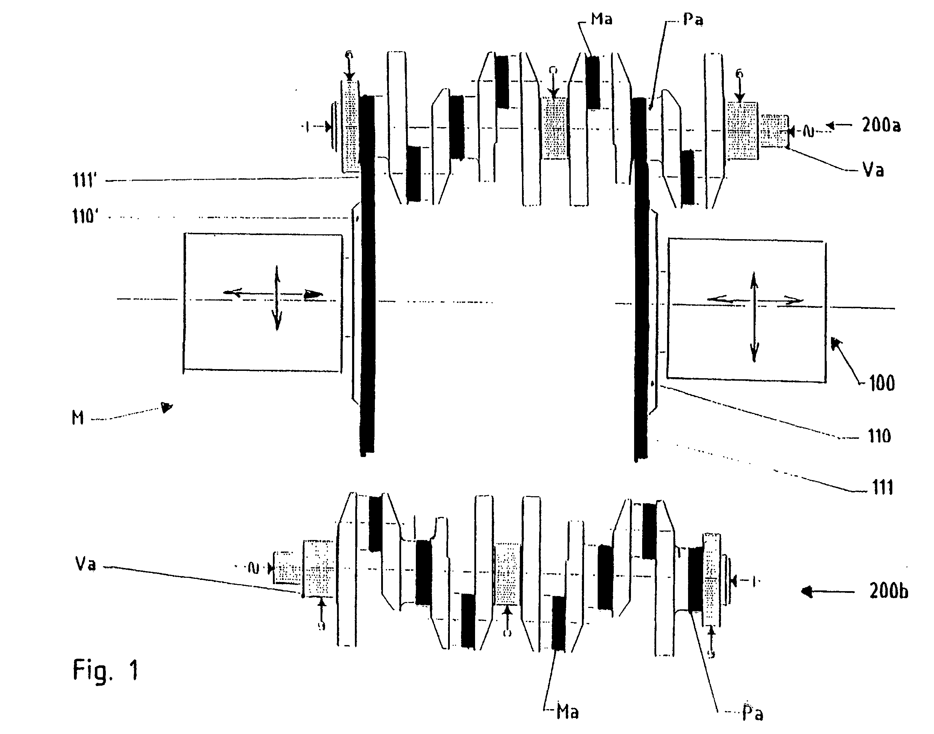

Telle qu'illustrée sur le dessin de la figure 1, la machine-outil M pour l'usinage de vilebrequins de l'invention est du type de celle comprenant, agencés sur un bâti le long d'un axe de transfert dans un même plan horizontal:
- un poste d'usinage 100 équipé d'au moins de deux disques porte-outils tournants 110 et 110' assurant l'usinage d'un vilebrequin Va,
- et deux stations de travail 200a et 200b qui, assurant l'entraînement en rotation du vilebrequin Va, sont disposées parallèlement en amont et en aval du poste d'usinage 100, de telle sorte que le disque porte-outil 110 de ce dernier monté mobile le long de l'axe de transfert puisse évoluer selon un mouvement de va-et-vient d'une station de travail 200a à l'autre 200b et assurer l'usinage d'un vilebrequin Va sur une station de travail 200a pendant les opérations auxiliaires nécessaires à un nouveau vilebrequin sur l'autre station de travail 200b.

Selon l'invention, l'outil 111 supporté par le susdit disque 110 assure l'usinage partiel des paliers Pa et manetons Ma du vilebrequin Va sur une première station de travail 200a puis assure le complément d'usinage sur la deuxième station de travail 200b.

Selon le mode de réalisation illustré, la machine-outil M comporte deux disques porte-outil 110 et 110' afin de permettre de réaliser l'usinage partiel des paliers Pa et manetons Ma avec un rendement amélioré.

Le procédé de travail d'une machine-outil M telle que représentée, consiste
- à réaliser des usinages partiels des manetons Ma et paliers Pa du vilebrequin Va sur une première station 200a,
- à déposer de la première station de travail 200a, le vilebrequin Va venant d'être partiellement usiné,
- à faire tourner ledit vilebrequin Va à 180° par rapport à un axe vertical,
- à installer ledit vilebrequin Va dans la deuxième station de travail 200b,
- et à assurer le complément d'usinage des manetons Ma et paliers Pa dudit vilebrequin Va sur ladite deuxième station 200b.

Tels qu'illustrés, la largeur des outils 111 et 111' des disques porte-outils 110 et 110' leur permette d'assurer l'usinage des paliers Pa et manetons Ma du vilebrequin entraîné en rotation sur la station de travail 200a, la zone usinée étant représentée noircie.

Puis ledit vilebrequin Va est retourné à 180° pour présenter, une fois installé dans la deuxième station de travail 200b, la partie non usinée desdits paliers Pa et manetons Ma. Ce retournement à 180° est très important si l'outil tournant est préformé de façon à réaliser une gorge dans le maneton Ma ou dans le palier Pa. Dans ce cas, le retournement autorise l'outil à opérer l'usinage de la gorge aux deux extrémités du palier Pa par exemple, tout en réalisant l'usinage partiel puis complet du palier.

Selon un mode préféré de réalisation et dans le cas où, comme illustrée, le poste d'usinage de la machine-outil d'usinage de vilebrequins est du type de celui comprenant au moins deux outils tournants 110 et 110', un premier outil tournant 110 peut être du type outil de fraisage et le deuxième outil tournant 110' du type meule. Cette caractéristique ouvre les champs de possibilités de gamme d'usinage utilisant deux stations de travail et un procédé d'usinage comprenant une rotation à 180° de la pièce à usiner.

Selon un mode préféré de réalisation de l'invention la machine-outil M comporte un portique de transfert assurant le passage du vilebrequin d'une station de travail à une autre et/ou d'une machine-outil à une autre. Ce portique de transfert, non représenté sur le dessin, est remarquable en ce qu'il comporte des moyens assurant la rotation à 180° du vilebrequin Va entre les deux stations de travail 200a et 200b.

On comprend que la machine-outil d'usinage M et son procédé de travail qui viennent d'être ci-dessus décrits et représentés, l'ont étés en vue d'une divulgation plutôt que d'une limitation. Bien entendu, divers aménagements, modifications et améliorations pourront être apportés à l'exemple ci-dessus, sans pour autant sortir du cadre de l'invention pris dans ses aspects et dans son esprit les plus larges.

Ainsi, par exemple, le moyen de mise en mouvement ne doit pas se limiter à celui illustré par la demande décrite dans l'art antérieur, à savoir un mandrin à chaque extrémité mais pourra être assuré par exemple par un mandrin associé à une lunette de reprise.

## Revendications

1. Machine-outil pour l'usinage de vilebrequins (Va) du type de celle comprenant, agencés sur un bâti dans un même plan horizontal:
- un poste d'usinage (100) équipé d'au moins un disque porte-outil tournant (110 ou 110') assurant l'usinage des vilebrequins (Va),
- et deux stations de travail (200a et 200b) qui assurant l'entraînement en rotation d'un vilebrequin (Va), sont disposées parallèlement en amont et en aval du poste d'usinage (100), de telle sorte que l'outil tournant (111 ou 111') du disque porte-outil (110 ou 110') de ce dernier monté mobile le long de l'axe de transfert puisse évoluer selon un mouvement de va-et-vient d'une station de travail (200a ou 200b) à l'autre (200b ou 200a) et assurer l'usinage d'un vilebrequin (Va) sur une station de travail (200a ou 200b) pendant les opérations auxiliaires nécessaires à un nouveau vilebrequin (Va) sur l'autre station de travail (200b ou 200a), l'outil tournant (111 ou 111') assurant l'usinage partiel des paliers (Pa) et manetons (Ma) du vilebrequin (Va) sur une première station de travail (200a ou 200b) et le même outil tournant (111 ou 111') assurant le complément d'usinage desdits paliers (Pa) et manetons (Ma) sur la deuxième station de travail (200b ou 200a), la machine-outil étant du type de celle comportant un portique de transfert assurant le passage du vilebrequin (Va) d'une station de travail (200a ou 200b) à une autre station de travail (200b ou 200a), **CARACTERISEE PAR LE FAIT QUE** le vilebrequin (Va) venant d'être usiné sur une première station de travail (200a ou 200b) est tourné à 180° selon un axe vertical avant d'être installé sur la deuxième station de travail (200b ou 200a), ledit portique comportant un moyen assurant la rotation à 180° du vilebrequin (Va) par rapport à un axe vertical.

2. Machine-outil d'usinage d'un vilebrequin (Va) selon la revendication 1, du type de celle où son poste d'usinage (100) comprend au moins deux outils tournants (111 et 111'), **CARACTERISEE PAR LE FAIT QUE** un premier outil tournant (111) est du type outil de fraisage et le deuxième outil tournant (111') est du type meule.

3. Procédé de travail d'une machine-outil (M) selon la revendication 1, du type de celle comprenant, agencés sur un bâti dans un même plan horizontal:
- un poste d'usinage (100) équipé d'au moins un disque porte-outil tournant (110 ou 110') assurant l'usinage des vilebrequins (Va),
- et deux stations de travail (200a et 200b) qui assurant l'entraînement en rotation d'un vilebrequin (Va), sont disposées parallèlement en amont et en aval du poste d'usinage (100), de telle sorte que l'outil tournant (111 ou 111') du disque porte-outil (110 ou 110') de ce dernier monté mobile le long de l'axe de transfert puisse évoluer selon un mouvement de va-et-vient d'une station de travail (200a ou 200b) à l'autre (200b ou 200a) et assurer l'usinage d'un vilebrequin (Va) sur une station de travail (200a ou 200b) pendant les opérations auxiliaires nécessaires à un nouveau vilebrequin (Va) sur l'autre station de travail (200b ou 200a), le procédé consiste
- à réaliser des usinages partiels des manetons (Ma) et paliers (Pa) du vilebrequin (Va) sur une première station (200a ou 200b),
- à déposer de la première station de travail (200a ou 200b) le vilebrequin (Va) venant d'être partiellement usiné,
- à faire tourner ledit vilebrequin (Va) à 180° par rapport à un axe vertical,
- à installer ledit vilebrequin (Va) dans la deuxième station de travail (200b ou 200a),
- à assurer le complément d'usinage des manetons (Ma) et paliers (Pa) dudit vilebrequin (Va) sur ladite deuxième station (200b ou 200a).

## Claims

1. Machine tool for machining crankshafts (Va) of the type of those comprising, fitted on a frame in a same horizontal plane :
- a machining station (100) fitted with at least one rotating tool holder disc (110 or 110') ensuring the machining of the crankshafts (Va),
- and two work stations (200a and 200b) which, ensuring the driving in rotation of a crankshaft (Va), are arranged parallel upstream and downstream to the machining station (100), so that the rotating tool (110 or 110') of this machining station mounted moveable along the transfer axis can move back and forth between one work station (200a or 200b) and the other (200b or 200a) and can ensure the machining of a crankshaft (Va) on one work station. (200a or 200b) during the auxiliary operations needed to a new crankshaft (Va) on the other work station (200b or 200a), they rotating tool (111 or 111') ensuring partial machining of the bearings (pa) and crankpins (Ma) of the crankshaft (Va) on a first work station (200a or 200b) and the same rotating tool (111 or 111') completing the machining of the said bearings (Pa) and crankpins (Ma) on the second work station (200b or 200a), the machine tool being of the type of those comprising a transfer gantry ensuring the passage of the crankshaft (Va) from one work station (200a or 200b) to another work station (200b or 200a), WHEREIN the crankshaft (Va) having been machined on a first work station (200a or 200b) is rotated to 180° about a vertical axis before being installed on the second work station (200b or 200a), the said gantry comprising means ensuring the rotation to 180° of the crankshaft (Va) with respect to a vertical axis.

2. Machine tool for machining crankshafts (Va) according to claim 1, of the type of those where its machining station (100) comprises at least two rotating tools (111 and 111') WHEREIN a first rotating tool (111) is of the milling type and the second rotating tool (111') is of the grinding type.

3. Working method of a machine tool (M) according to claim 1, of the type of those comprising, fitted on a frame in a same horizontal plane :
- a machining station (100) fitted with at least one rotating tool holder disc (110 or 110') ensuring the machining of the crankshaft (va),
- and two work stations (200a or 200b) which ensuring the driving in rotation of a crankshaft (Va), are arranged parallel upstream and downstream to the machining station (100), so that the rotating tool (111 or 111') of the tool holder disc (110 or 110') of the machining station mounted moveable along the transfer axis can move back and forth between one work station (200a or 200b) and the other (200b or 200a) and ensure the machining of a crankshaft (Va) on one work station (200a or 200b) during the auxiliary operations needed to a new crankshaft (Va) on the other work station (200b or 200a), the method consists of
- realizing partial machinings of crankpins (Ma) and bearings (Pa) of the crankshaft (Va) on a first station (200a or 200b),
- retrieving from the first work station (200a or 200b) the crankshaft (Va) having been partially machined,
- rotating the said crankshaft (Va) to 180° with respect to a vertical axis,
- installing the said crankshaft (Va) on the second work station (200b or 200a),
- completing the machining of the crankpins (Ma) and bearings (Pa) of the said crankshaft (Va) on the said second station (200b or 200a).

## Patentansprüche

1. Werkzeugmaschine für die Bearbeitung von Kurbelwellen (Va), mit einem Gestell, das in der gleichen waagrechten Ebene aufweist:
- eine. Bearbeitungsstation (100), die mit mindestens einer werkzeugtragenden Scheibe (110 oder 110') versehen ist, die die Bearbeitung der Kurbelwellen durchführt und
- zwei Arbeitsstationen (200a und 200b), in denen eine Kurbelwelle (Va) in Drehungen versetzt wird und die parallel vor und hinter der Bearbeitungsstation (100) derart angeordnet sind, dass das sich drehende Werkzeug (111 oder 111') der Scheibe (110 oder 110') der letzteren, die beweglich entlang der Vorschubachse ist, eine Hin- und Herbewegung zwischen der einen Arbeitsstation (200a oder 200b) und der anderen Arbeitsstation (200b oder 200a) ausführen kann und die Bearbeitung einer Kurbelwelle (Va) in einer Arbeitsstation (200a oder 200b) durchführt während der zusätzlichen Schritte der Handhabung, die für das Einsetzen einer neuen Kurbelwelle (Va) in die andere Arbeitsstation (200b oder 200a) erforderlich sind, wobei das sich drehende Werkzeug (111 oder 111') eine teilweise Bearbeitung der Lager (Pa) und der Kurbelzapfen (Ma) der Kurbelwelle (Va) in der ersten Arbeitsstation (200a oder 200b) durchführt und dasselbe sich drehende Werkzeug (111 oder 111') die restliche Bearbeitung der Lager (Pa) und Kurbelzapfen (Ma) in der zweiten Arbeitsstation (200b oder 200a) durchführt und wobei die Werkzeugmaschine einen Transportrahmen aufweist für die Übergabe der Kurbelwelle (Va) von einer Arbeitsstation (200a oder 200b) zur anderen Arbeitsstation (200b oder 200a), **dadurch gekennzeichnet, dass** die Kurbelwelle (Va) nach der Bearbeitung in der ersten Arbeitsstation (200a oder 200b) um 180° bezüglich einer senkrechten Achse verdreht wird, bevor sie in die zweite Arbeitsstation (200b oder 200a) eingesetzt wird, wobei der Rahmen eine Anordnung zur Durchführung der Verdrehung um 180° der Kurbelwelle (Va) bezüglich einer senkrechten Achse aufweist.

2. Werkzeugmaschine für die Bearbeitung einer Kurbelwelle (Va) nach Anspruch 1, bei der die Bearbeitungsstation (100) mindestens zwei sich drehende Werkzeuge (111 und 111') aufweist, **dadurch gekennzeichnet, dass** das erste sich drehende Werkzeug (111) ein Fräswerkzeug ist und das zweite sich drehende Werkzeug (111') ein Schleifwerkzeug ist.

3. Arbeitsverfahren für eine Werkzeugmaschine (M) nach Anspruch 1, mit einem Gestell, das in der gleichen waagrechten Ebene aufweist:
- eine Bearbeitungsstation (100), die mit mindestens einer werkzeugtragenden Scheibe (110 oder 110') versehen ist, die die Bearbeitung der Kurbelwelle durchführt und
- zwei Arbeitsstationen (200a und 200b), in denen eine Kurbelwelle (Va) in Drehungen versetzt wird und die parallel vor und hinter der Bearbeitungsstation (100) derart angeordnet sind, dass das sich drehende Werkzeug (111 oder 111') der Scheibe (110 oder 110') der letzteren, die beweglich entlang der Vorschubachse ist, eine Hin- und Herbewegung zwischen der einen Arbeitsstation (200a oder 200b) und der anderen Arbeitsstation (200b oder 200a) ausführen kann und die Bearbeitung einer Kurbelwelle (Va) in einer Arbeitsstation (200a oder 200b) durchführt während der zusätzlichen Schritte der Handhabung, die für das Einsetzen einer neuen Kurbelwelle (Va) in die andere Arbeitsstation (200b oder 200a) erforderlich sind, wobei das Verfahren darin besteht:
- die teilweisen Bearbeitungen der Kurbelzapfen (Ma) und Lager (Pa) der Kurbelwelle (Va) in einer ersten Station (200a oder 200b) durchzuführen,
- die teilweise bearbeitete Kurbelwelle (Va) aus der ersten Arbeitsstation (200a oder 200b) zu entnehmen,
- die Kurbelwelle (Va) um 180° bezüglich einer senkrechten Achse zu verdrehen,
- die Kurbelwelle (Va) in die zweite Arbeitsstation (200b oder 200a) einzusetzen und
- die restliche Bearbeitung der Kurbelzapfen (Ma) und der Lager (Pa) der Kurbelwelle (Va) in dieser zweiten Station (200b oder 200a) durchzuführen.
